# EUROPEAN PATENT APPLICATION

(11) **EP 4 769 598 A1**
(43) Date of publication of application: **01.07.2026**
(21) Application number: 25783003.4
(22) Date of filing: 02.04.2025
(51) Int. Cl.: H01M 10/04, H01M 10/0583

(54) **SECONDARY BATTERY**

(30) Priority: 03.04.2024 KR 20240045248
(71) Applicant: LG Energy Solution, Ltd., Seoul 07335 (KR)
(72) Inventor: LEE, Hyo Joon, Daejeon 34122 (KR)
(74) Representative: Plasseraud IP
(86) International application number: PCT/KR2025/004336
(87) International publication number: WO 2025/211744

(57) **Abstract**

Disclosed herein relates to a secondary battery including: an electrode assembly manufactured in a stack and folding manner; and a case accommodating the electrode assembly, wherein the electrode assembly comprises six or more unit cells adhered to a folding separator, each of the six or more unit cells having one surface adhered to the folding separator, wherein the unit cells are arranged such that, when the electrode assembly is unfolded, the number of negative electrodes among the electrodes forming the other surfaces of the unit cells, with the other surfaces not adhered to the folding separator, is minimized.

## Description

### [Technical field]

The present disclosure relates to a secondary battery, and more particularly to a secondary battery with extended life.

This application claims the benefit of Korean Patent Application No. 10-2024-0045248, filed on April 3, 2024, the disclosure of which is incorporated herein by reference.

### [Background]

A secondary battery is a battery that can be charged and discharged, unlike a primary battery that cannot be charged, and is widely used in electronic devices such as cell phones, laptops, camcorders, and electric vehicles. In particular, lithium secondary batteries have a larger capacity than nickel-cadmium batteries or nickel-hydrogen batteries, and their energy density per unit weight is high, so their use is rapidly increasing.

Various structures and/or manufacturing methods have been proposed and applied to manufacture secondary batteries, and various efforts have been made to increase the lifetime of secondary batteries.

### [Summary]

### [Technical Problem]

The technical challenge of the present disclosure is to provide a secondary battery with an extended life.

### [Technical Solution]

The present disclosure addresses the above technical problem by providing a secondary battery including: an electrode assembly manufactured in a stack and folding manner; and a case accommodating the electrode assembly, wherein the electrode assembly comprises six or more unit cells adhered to a folding separator, each of the six or more unit cells having one surface adhered to the folding separator, wherein the unit cells are arranged such that, when the electrode assembly is unfolded, the number of negative electrodes among the electrodes forming the other surfaces of the unit cells, with the other surfaces not adhered to the folding separator, is minimized.

In some embodiments, the outermost unit cells on both sides of the electrode assembly may each have a stacked structure of a single positive electrode/separator/negative electrode/separator/positive electrode.

In some embodiments, the electrode assembly may be configured such that the polarity of the electrodes of the pair of unit cells facing each other across the folding separator is different.

In some embodiments, the electrode assembly may include at least one mono-cell.

In some embodiments, the electrode assembly may include eight or more unit cells, and the number of mono-cells may be less than 1/2 of the total number of unit cells.

In some embodiments, the electrode assembly may be an electrode assembly manufactured by arranging six or more unit cells on a folding separator and then folding the folding separator by adhering one surface of the unit cells to the folding separator.

In some embodiments, a unit cell in which a positive electrode is provided on each side of a negative electrode and a separator is provided between the electrodes is defined as an A-type; a unit cell in which a negative electrode is provided on each side of a positive electrode and a separator is provided between the electrodes is defined as a C-type; a unit cell in which a single positive electrode and a positive electrode are respectively provided on both sides of a negative electrode, a separator is disposed between the electrodes, and a tab of the single positive electrode is disposed on the right side is defined as an R-type; a unit cell in which a single positive electrode and a positive electrode are respectively provided on both sides of a negative electrode, a separator is disposed between the electrodes, and a tab of the single positive electrode is disposed on the left side is defined as an L-type; a unit cell in which a negative electrode and a positive electrode are respectively provided on both sides of a separator, and a tab of the positive electrode is disposed on the right side is defined as an MR-type; and a unit cell in which a negative electrode and a positive electrode are respectively provided on both sides of a separator, and a tab of the positive electrode is disposed on the left side is defined as an ML-type.

In some embodiments, the electrode assembly may comprise twelve unit cells, and wherein when the electrode assembly is unfolded, the arrangement of the unit cells may be one of the following arrangements:

R-L-C-MR-A-MR-C-MR-A-C-C-A;

R-L-ML-C-ML-A-ML-C-C-A-A-C.

In some embodiments, the electrode assembly may comprise eleven unit cells, and wherein when the electrode assembly is unfolded, the arrangement of the unit cells is one of the following arrangements:

R-L-C-MR-A-MR-C-C-A-A-C;

R-L-ML-C-ML-A-C-C-A-A-C;

R-L-ML-C-ML-ML-ML-A-C-C-A;

R-L-C-MR-MR-MR-A-MR-C-C-A.

In some embodiments, the electrode assembly may comprise ten unit cells, and wherein when the electrode assembly is unfolded, the unit cells are arranged in the order of: R-L-ML-C-ML-A-ML-C-C-A.

In some embodiments, the electrode assembly may comprise nine unit cells, and wherein when the electrode assembly is unfolded, the arrangement of the unit cells is one of the following arrangements:

R-L-C-MR-A-MR-C-C-A;

R-L-ML-C-ML-A-C-C-A;

R-L-ML-C-ML-ML-ML-A-C.

In some embodiments, the electrode assembly may comprise seven unit cells, and wherein when the electrode assembly is unfolded, the unit cells are arranged in the order of: R-L-ML-MR-ML-MR-C.

### [Advantageous Effects]

The secondary battery of the present disclosure has the effect of extending the life of the secondary battery by maximally suppressing the precipitation of lithium in the form of fingerprints in the secondary battery manufactured by the stack and folding method.

The effects that can be obtained from the exemplary embodiments of the present disclosure are not limited to the effects mentioned above, and other effects not mentioned can be clearly derived and understood by a person having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by a person having ordinary knowledge in the technical field.

### [Brief Description of the Drawings]

FIG. 1 is an exploded perspective view of a secondary battery according to one embodiment of the present disclosure.
FIG. 2 is a conceptual diagram illustrating a method of manufacturing an electrode assembly by stack and folding method.
FIGS. 3 through 8 are side views illustrating surfaces of various unit cells that may be included in the unit cell.
FIG. 9 is an image illustrating the number of ways in which the unit cells may be arranged when the electrode assembly is unfolded, when the number of stacked unit cells is six.
FIG. 10 is an image illustrating the number of possible arrangements of the unit cells when the electrode assembly is unfolded, when the number of stacked unit cells is seven.
FIG. 11 is an image illustrating the number of possible arrangements of the unit cells when the electrode assembly is unfolded, when the number of stacked unit cells is eight.
FIG. 12 is an image illustrating the number of possible arrangements of the unit cells when the electrode assembly is unfolded, when the number of stacked unit cells is nine.
FIG. 13 is an image illustrating the number of possible arrangements of the unit cells when the electrode assembly is unfolded, when the number of stacked unit cells is ten.
FIG. 14 is an image illustrating the number of possible arrangements of the unit cells when the electrode assembly is unfolded, when the number of stacked unit cells is eleven.
FIG. 15 is an image illustrating the number of possible arrangements of the unit cells when the electrode assembly is unfolded, when the number of stacked unit cells is twelve.

### [Best Mode for Carrying out the Invention]

Hereinafter, preferred embodiments of the concept of the present disclosure will be described in detail with reference to the accompanying drawings. However, the embodiments of the concept of the present disclosure may be modified in various other forms, and it should not be construed that the scope of the present disclosure concept is limited by the embodiments described below. It is preferred that the embodiments of the present disclosure concept be interpreted as being provided to more fully explain the concept of the present disclosure to one of ordinary skill in the art. Like designations generally refer to like elements. Furthermore, the various elements and areas in the drawings are schematically depicted. Accordingly, the concepts of the present disclosure are not limited by the relative sizes or spacing depicted in the accompanying drawings.

Terms such as first, second, and the like may be used to describe various components, but the components are not limited by such terms. These terms are used only for the purpose of distinguishing one component of from another. For example, a first component may be named a second component, and vice versa, a second component may be named a first component, without departing from the scope of the present disclosure concept.

The terms used in this application is intended to describe specific embodiments only and is not intended to limit the concept of the present disclosure. Expressions in the singular include the plural unless the context clearly indicates otherwise. In this application, expressions such as "includes" or "has" are intended to designate the presence of the features, counts, steps, operations, components, parts, or combinations thereof described herein, and are not to be understood as precluding the possibility of the presence or addition of one or more other features, counts, operations, components, parts, or combinations thereof.

Unless otherwise defined, all terms used herein, including technical and scientific terms, shall have the same meaning as commonly understood by one of ordinary skill in the technical field to which the present disclosure concept belongs. It will also be understood that terms such as commonly used, dictionary-defined terms are to be construed to have a meaning consistent with their meaning in the context of the art to which they relate, and are not to be construed in an unduly formal sense unless expressly defined herein.

Certain sequences of processes may be performed differently from the order in which they are described when certain embodiments are otherwise practicable. For example, two processes described in succession may be performed substantially simultaneously, or they may be performed in an order opposite to the order described.

In the accompanying drawings, variations of the illustrated shapes may be expected, for example, depending on manufacturing techniques and/or tolerances. Accordingly, embodiments of the present disclosure should not be construed as limited to the specific geometry of the areas shown herein, and should include, for example, variations in geometry resulting from the manufacturing process. All terms "and/or" used herein include each and every combination of one or more of the components mentioned. Further, the term "substrate" as used herein may refer to the substrate itself, or to a laminated structure including the substrate and any predetermined layers or films formed on its surface. Further, the term "surface of the substrate" as used herein may refer to an exposed surface of the substrate itself, or an outer surface of a predetermined layer or film formed on the substrate.

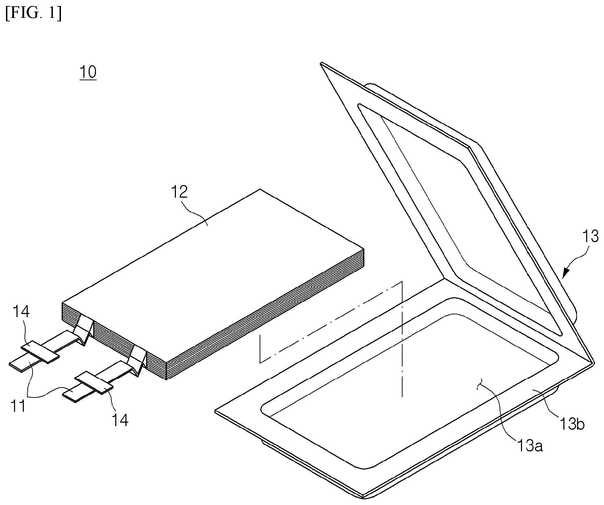

FIG. 1 is an exploded perspective view of a secondary battery 10 according to one embodiment of the present disclosure.

Referring to FIG. 1, the secondary battery 10 includes an electrode assembly 12 to which electrode leads 11 are attached and a case 13.

The case 13 comprises a storing part 13a for storing the electrode assembly 12, and a sealing part 13b formed to seal the electrode assembly 12. The sealing part 13b may include a sealant resin, and the sealant resin may be fused along an outer circumferential surface of the storing part 13a to seal the electrode assembly 12.

The case 13 may be in the form of a multilayer film comprising an outer layer for external impact protection, a metal barrier layer to repel moisture, and a sealant layer to seal the case. The outer layer may include a film of poly(ethylene terephthalate; PET), polybutylene terephthalate, polyethylene naphthalate, polybutylene naphthalate, copolymerized polyester, polycarbonate, nylon, or other polyester-based films, and may be single- or multi-layered. The metal barrier layer may include aluminum, copper, or the like. The sealant layer may include a sealant resin, and may comprise a single layer or multiple layers. The sealant resin may include polypropylene (PP), acid modified polypropylene (PPa), random polypropylene, ethylene propylene copolymer, or two or more of the foregoing. The ethylene propylene copolymer may include, but is not limited to, ethylene-propylene rubber, ethylene-propylene block copolymer, and the like.

In some embodiments, the case 13 may be a pouch case. If the case 13 is a pouch case, the case 13 may include an upper pouch and a lower pouch. If the case 13 includes an upper pouch and a lower pouch, the case 13 may have a structure such that the upper pouch and the lower pouch are positioned so that the sealant resins are opposite each other, and then the opposing sealant resins fuse together under heat and pressure to seal the battery.

The fusion of the sealing part 13b may be by thermal fusion, ultrasonic fusion, or the like, but is not limited as long as the sealing part 13b can be fused. The sealing part 13b may be a four-sided seal or a three-sided seal at the rim of the case 13. A three-sided sealing structure means that after the upper pouch and the lower pouch are formed into a single pouch sheet, the border of the upper pouch and the lower pouch is bent so that the electrode assembly storing parts 13a formed in the upper pouch and the lower pouch are enclosed, and the rim of the remaining three sides except for the bending part is sealed.

The electrode leads 11 may be stored within the case 13 such that a portion of them are exposed to the outside of the case 13. The secondary battery 10 may further include a lead film 14 on the electrode leads 11.

The lead film 14 wraps around a portion of the outer surface of the electrode lead 11, and is interposed between the electrode lead 11 and the sealing part 13b. The lead film 14 is interposed between the electrode lead 11 and the sealing part 13b to assist in the engagement of the electrode lead 11 and the sealing part 13b.

However, the case 13 of the present disclosure is not limited to a pouch case, and any case suitable for the manufacture of prismatic or cylindrical batteries may be employed.

The electrode assembly 12 includes a positive electrode, a negative electrode, and a separator. The electrode assembly 12 is a stack and folding electrode assembly.

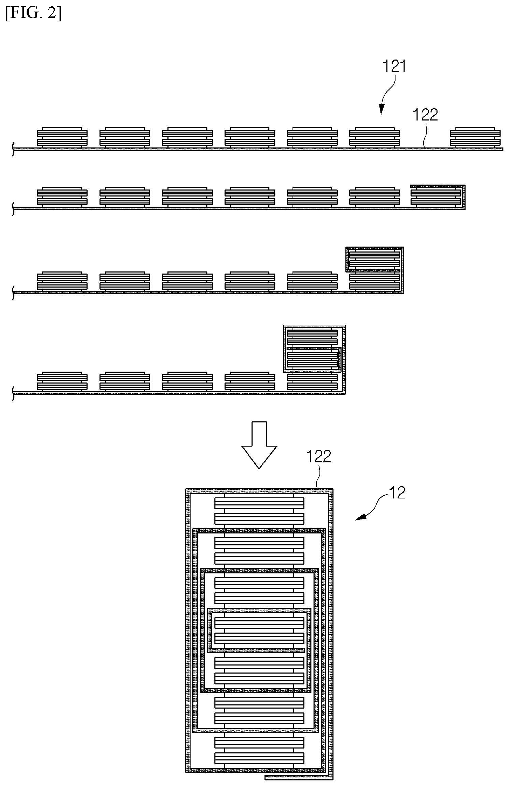

FIG. 2 is a conceptual diagram illustrating a method of manufacturing the electrode assembly 12 in a stack and folding manner.

Referring to FIG. 2, the electrode assembly 12 may be obtained by aligning and adhering the unit cells 121 on a folding separator 122 and then successively folding the folding separator 122. Such a stack and folding electrode assembly 12 has high stability because the movement of the unit cells 121 can be restricted by the folding separator 122.

The unit cells 121 may be a mono- and/or a bi-cell, and a pair of unit cells 121 may be neighboring each other with the folding separator 122 between them. In a neighboring pair of unit cells 121, the polarity of the electrodes facing each other with the folding separator 122 in between may be different.

Various types of unit cells may be employed in the unit cells 121.

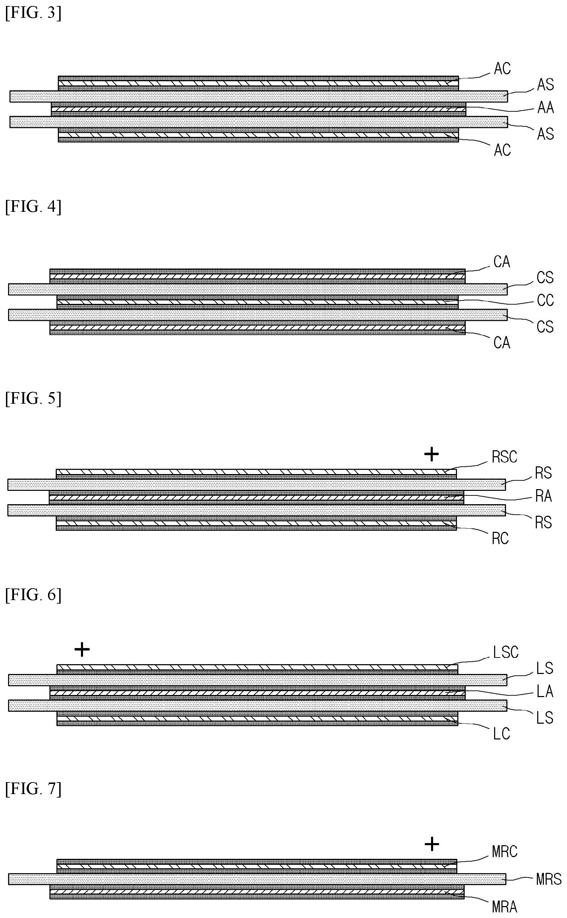

FIGS. 3 through 8 are side views illustrating surfaces of various unit cells that may be included in the unit cell 121.

Referring to FIG. 3, a positive electrode AC is provided on each side of a negative positive electrode AA, and a separator AS is provided between the negative electrode AA and the positive electrode AC. The negative electrode AA includes a negative electrode active material layer on both sides of a current collector, and the positive electrode AC includes a positive electrode active material layer on both sides of a current collector. This type of unit cell may be referred to as an A-type.

Referring to FIG. 4, a negative electrode CA is provided on each side of a positive electrode CC, and a separator CS is provided between the positive electrode CC and the negative electrode CA. The negative electrode CA includes a negative electrode active material layer on both sides of a current collector, and the positive electrode CC includes a positive electrode active material layer on both sides of a current collector. This type of unit cell may be referred to as a C-type.

Referring to FIG. 5, a positive electrode RC is provided on one side of a negative electrode RA and a single positive electrode RSC is provided on the other side of the negative electrode RA. A separator RS is provided between the negative electrode RA and the positive electrode RC and between the negative electrode RA and the single positive electrode RSC. The negative electrode RA includes a negative electrode active material layer on both sides of a current collector, and the positive electrode RC includes a positive electrode active material layer on both sides of the current collector. And the single positive electrode RSC includes a positive electrode active material layer on only one side of a current collector facing the separator RS, and the tab of the single positive electrode RSC is disposed on the right side. This type of unit cell may be referred to as an R-type.

Referring to FIG. 6, a positive electrode LC is provided on one side of a negative electrode LA and a single positive electrode LSC is provided on the other side of the negative electrode LA. A separator LS is provided between the negative electrode LA and the positive electrode LC and between the negative electrode LA and the single positive electrode LSC. The negative electrode LA includes a negative electrode active material layer on both sides of a current collector, and the positive electrode LC includes a positive electrode active material layer on both sides of a current collector. And the single positive electrode LSC includes a positive electrode active material layer on only one side of a current collector facing the separator LS, and the tab of the single positive electrode LSC is disposed on the left side. This type of unit cell may be referred to as an L-type.

The A-type, C-type, R-type, and L-type unit cells described above are all bi-cells.

Referring to FIG. 7, a negative electrode MRA may be provided on one side of a separator MRS, a positive electrode MRC may be provided on the other side of the separator MRS, and a tab of the positive electrode MRC may be disposed on the right side. The negative electrode MRA includes a negative electrode active material layer on both sides of a current collector, and the positive electrode MRC includes a positive electrode active material layer on both sides of a current collector. This type of unit cell may be referred to as an MR-type.

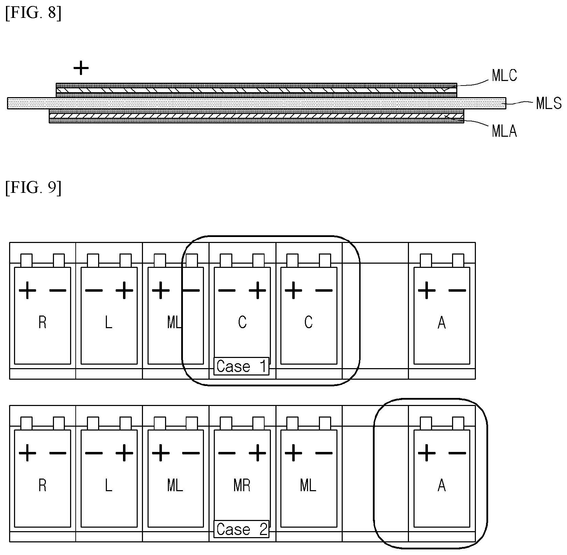

Referring to FIG. 8, a negative electrode MLA may be provided on one side of a separator MLS, a positive electrode MLC may be provided on the other side of the separator MLS, and a tab of the positive electrode MLC may be disposed on the left side. The negative electrode MLA includes a negative electrode active material layer on both sides of the current collector, and the positive electrode MLC includes a positive electrode active material layer on both sides of the current collector. This type of unit cell may be referred to as an ML-type.

Both the MR-type and ML-type unit cells described above are mono-cells.

The folding separator 122 may be made of any porous polymeric substrate conventionally used in the art, such as, but not limited to, a polyolefin-based porous membrane or nonwoven fabric.

Examples of the polyolefin-based porous membranes include membranes formed from polyethylene, such as high-density polyethylene, linear low-density polyethylene, low-density polyethylene, and ultra-high molecular weight polyethylene, and polyolefin-based polymers, such as polypropylene, polybutylene, and polypentene, either alone or a mixture thereof.

In addition to polyolefin-based nonwoven fabrics, the nonwoven fabrics may also include, for example, polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, and polyethylenenaphthalate, either alone or as a mixture of these polymers. The structure of the nonwoven fabric may be a spunbonded nonwoven fabric or a melt-blown nonwoven fabric composed of long fibers.

The thickness of the porous polymeric substrate is not particularly limited, but may be from about 5 µm to about 50 µm, and the pore size and porosity present in the porous polymeric substrate are also not particularly limited, but may be from about 0.01 µm to about 50 µm and from about 10% to about 95%, respectively. And, in this case, the porous polymeric substrate may be formed in a single layer, or may be formed by laminating two or more layers.

The unit cells shown in FIGS. 3 through 8 may be aligned and adhered to the folding separator 122 as shown in FIG. 2. In this case, the electrodes forming one surface of the unit cell 121 are adhered to the folding separator 122, and the electrodes forming the other surface of the unit cell 121 are not adhered to the folding separator 122. The electrodes that are not adhered to the folding separator 122 face the folding separator 122 after folding, but are not adhered to the folding separator 122.

When the electrode on the other surface unadhered to the folding separator 122 is a negative electrode, the lithium tends to precipitate in a fingerprint pattern as the charge and discharge cycles are repeated, which can be a factor in limiting the lifetime of the secondary battery. It is understood that this is due to the fact that when the electrode unadhered to the folding separator 122 is the negative electrode, the unadhered surface has a strong tendency to act as an interfacial diffusion resistance, which promotes chemical side reactions and accelerates electrolyte consumption.

Therefore, the inventors of the present disclosure have found it important to reduce the number of unit cells 121 in which the electrode on the exposed surface, which is not adhered to the folding separator 122, is the negative electrode.

However, it was found that when the number of stacked unit cells 121 is five or less, the number of unit cells 121 with exposed electrodes that are not adhered to the folding separator 122 is constant, even when considering all possible arrangements of the unit cells 121. Therefore, it was found that when the number of stacked unit cells 121 is five or less, it is difficult to minimize the number of unit cells 121 with exposed electrodes that are not adhered to the folding separator 122.

However, it was found that when the number of stacked unit cells 121 is six or more, it is possible to minimize the number of unit cells 121 in which the exposed electrode, not adhered to the folding separator 122, is a negative electrode, when considering all possible arrangements of the unit cells 121.

For a number of stacked unit cells 121 of six, the number of possible arrangements of the unit cells 121 when the electrode assembly is unfolded is shown in FIG. 9. Among these, the case having an arrangement of R-L-ML-MR-ML-C (i.e., Case 2) is the case that minimizes the number of unit cells 121 in which an exposed electrode, not adhered to the folding separator 122, is the negative electrode.

As shown in FIG. 2, the unit cell 121 from which folding begins is the rightmost disposed unit cell 121, and a blank area corresponding to the width of one unit cell 121 may be disposed between the two rightmost disposed unit cells 121. These rules may be applied even when the number of stacked unit cells 121 is greater than six.

Furthermore, the last two unit cells 121 on which the folding is terminated are R-type and L-type. The R-type and L-type unit cells 121 have positive electrodes as electrodes that are not adhered to the folding separator 122.

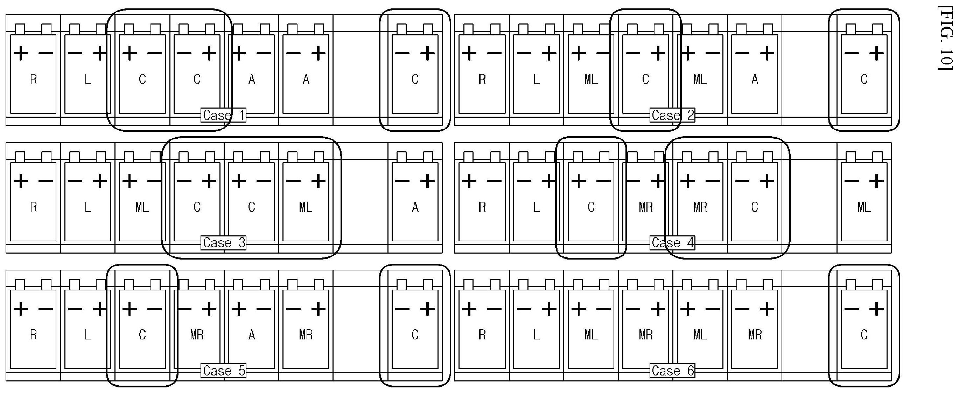

When the number of stacked unit cells 121 is seven, the possible arrangements of the unit cells 121 when the electrode assembly is unfolded are shown in FIG. 10. Among these, the case having an arrangement of R-L-ML-MR-ML-MR-MR-C (i.e., Case 6) is the case that minimizes the number of unit cells 121 in which an exposed electrode, not adhered to the folding separator 122, is the negative electrode.

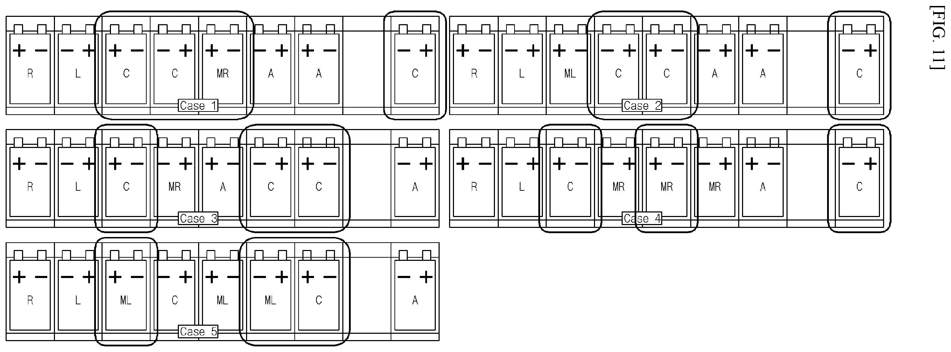

When the number of stacked unit cells 121 is eight, the cases in which the unit cells 121 can be arranged when the electrode assembly is unfolded are shown in FIG. 11. In Case 1, the number of unit cells 121 in which the exposed electrode is the negative electrode is four, and in the other cases, the number of unit cells 121 in which the exposed electrode is the negative electrode is three. Thus, when the number of stacked unit cells 121 is eight, any of the arrangements of Case 2 to Case 5 may be adopted.

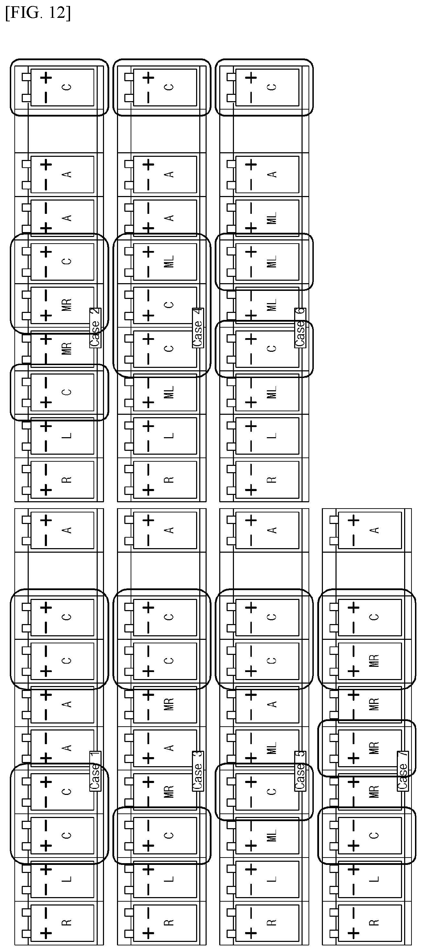

In the case where the number of stacked unit cells 121 is nine, the possible arrangements of the unit cells 121 when the electrode assembly is unfolded are shown in FIG. 12. Among these, the minimum number of unit cells 121 in which the exposed electrode is the negative electrode is one of the following three cases:

R-L-C-MR-A-MR-C-C-A (Case 3);

R-L-ML-C-ML-A-C-C-A (Case 5);

R-L-ML-C-ML-ML-ML-A-C (Case 6).

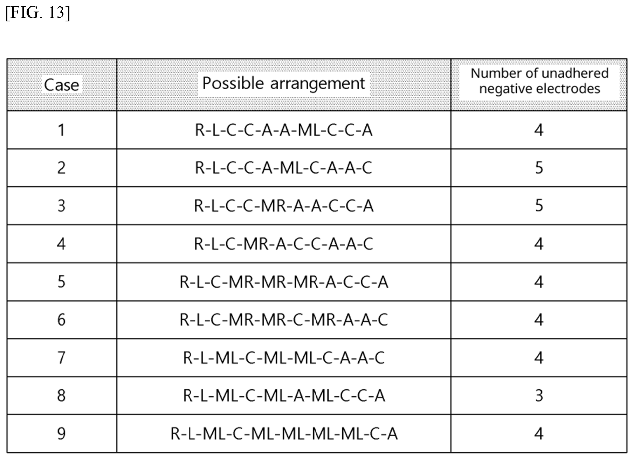

When the number of stacked unit cells 121 is ten, the cases in which the unit cells 121 can be arranged when the electrode assembly is unfolded are shown in FIG. 13. Among these, the case having an arrangement of R-L-ML-C-ML-A-ML-C-C-A (i.e., Case 8) is the case that minimizes the number of unit cells 121 in which an exposed electrode, not adhered to the folding separator 122, is the negative electrode.

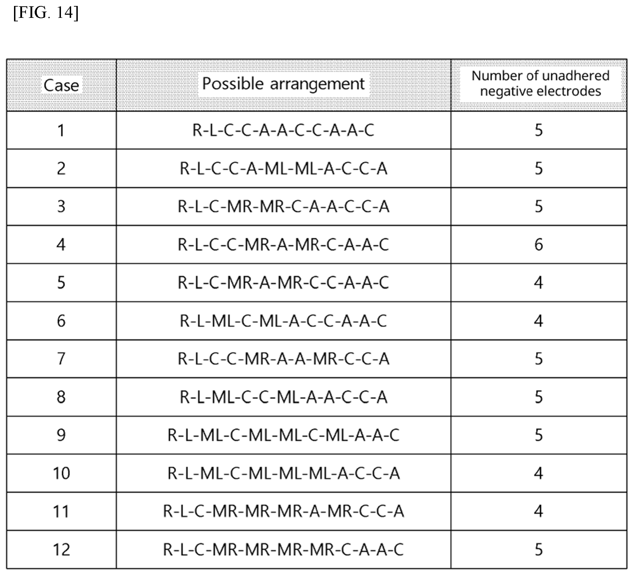

In the case where the number of stacked unit cells 121 is eleven, the possible arrangements of the unit cells 121 when the electrode assembly is unfolded are shown in FIG. 14. Among these, the minimum number of unit cells 121 in which the exposed electrode is the negative electrode is one of the following four cases:

R-L-C-MR-A-MR-C-C-A-A-C (Case 5);

R-L-ML-C-ML-A-C-C-C-A-A-C (Case 6);

R-L-ML-C-ML-ML-ML-A-C-C-A (Case 10);

R-L-C-MR-MR-MR-A-MR-C-C-A (Case 11).

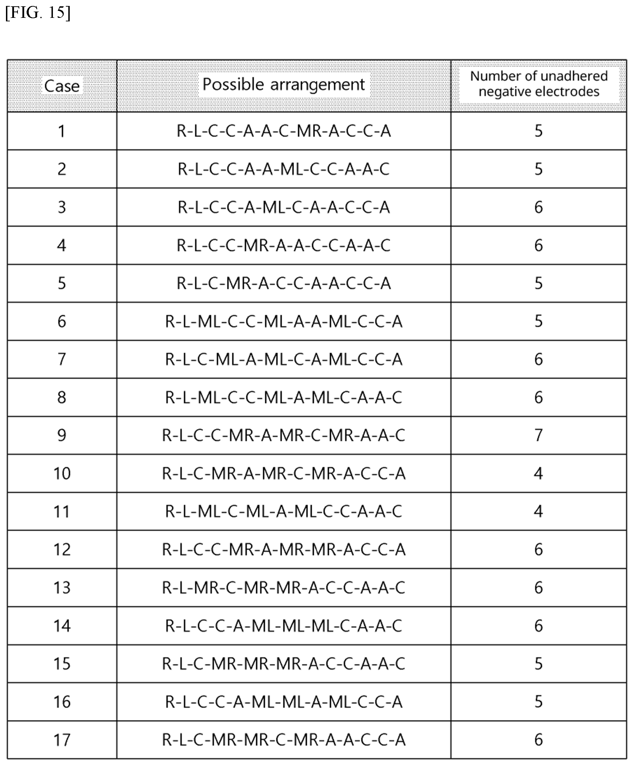

When the number of stacked unit cells 121 is twelve, the possible arrangements of the unit cells 121 when the electrode assembly is unfolded are shown in FIG. 15. Among these, the minimum number of unit cells 121 in which the exposed electrode is the negative electrode is one of the following two cases:

R-L-C-MR-A-MR-C-MR-A-C-C-A (Case 10);

R-L-ML-C-ML-A-ML-C-C-A-A-C (Case 11).

A person of ordinary skill in the art will be able to consider all possible cases, even when the number of stacked unit cells 121 is greater than thirteen, and find the case(s) that minimizes the number of unit cells 121 in which exposed electrodes is the negative electrode according to the method described above.

The unit cells 121 may include at least one mono-cell. In some embodiments, the number of mono-cells may be less than one-half (1/2) of the total number of unit cells 121.

By minimizing the number of unit cells 121 in which the electrode on the exposed the other surface, which is not adhered to the folding separator 122, is the negative electrode, the secondary battery 10 according to embodiments of the present disclosure can maximally suppress the tendency of lithium to precipitate into fingerprint shapes as charge and discharge cycles are repeated. This can contribute to extending the lifetime of the secondary battery.

Although embodiments of the present disclosure have been described in detail above, one having ordinary knowledge in the technical field to which the present disclosure belongs will be able to make many modifications to the present disclosure without departing from the spirit and scope of the present disclosure as defined in the appended claims. Accordingly, future modifications of the present disclosure will not depart from the art of the present disclosure.

### <Description of Reference Numerals>

10: SECONDARY BATTERY
11: ELECTRODE LEAD
12: ELECTRODE ASSEMBLY
13: CASE
13a: ELECTRODE ASSEMBLY STORING PART
13b: SEALING PART
14: LEAD FILM
121: UNIT CELL
122: FOLDING SEPARATOR

## Claims

1. A secondary battery comprising:
an electrode assembly manufactured in a stack and folding manner; and
a case accommodating the electrode assembly, wherein
the electrode assembly comprises six or more unit cells adhered to a folding separator, each of the six or more unit cells having one surface adhered to the folding separator, wherein
the unit cells are arranged such that, when the electrode assembly is unfolded, the number of negative electrodes among the electrodes forming the other surfaces of the unit cells, with the other surfaces not adhered to the folding separator, is minimized.

2. The secondary battery of claim 1, wherein
the outermost unit cells on both sides of the electrode assembly each have a stacked structure of a single positive electrode/separator/negative electrode/separator/positive electrode.

3. The secondary battery of claim 1, wherein
the electrode assembly is configured such that the polarity of the electrodes of the pair of unit cells facing each other across the folding separator is different.

4. The secondary battery of claim 1, wherein
the electrode assembly comprises at least one mono-cell.

5. The secondary battery of claim 1, wherein
the electrode assembly comprises eight or more unit cells, and the number of mono-cells is less than 1/2 of the total number of unit cells.

6. The secondary battery of claim 1, wherein
the electrode assembly is an electrode assembly manufactured by arranging six or more unit cells on a folding separator and then folding the folding separator by adhering one surface of the unit cells to the folding separator.

7. The secondary battery of claim 1, wherein
a unit cell in which a positive electrode is provided on each side of a negative electrode and a separator is provided between the electrodes is defined as an A-type;
a unit cell in which a negative electrode is provided on each side of a positive electrode and a separator is provided between the electrodes is defined as a C-type;
a unit cell in which a single positive electrode and a positive electrode are respectively provided on both sides of a negative electrode, a separator is disposed between the electrodes, and a tab of the single positive electrode is disposed on the right side is defined as an R-type;
a unit cell in which a single positive electrode and a positive electrode are respectively provided on both sides of a negative electrode, a separator is disposed between the electrodes, and a tab of the single positive electrode is disposed on the left side is defined as an L-type;
a unit cell in which a negative electrode and a positive electrode are respectively provided on both sides of a separator, and a tab of the positive electrode is disposed on the right side is defined as an MR-type; and
a unit cell in which a negative electrode and a positive electrode are respectively provided on both sides of a separator, and a tab of the positive electrode is disposed on the left side is defined as an ML-type; wherein
the electrode assembly comprises twelve unit cells, and wherein
when the electrode assembly is unfolded, the arrangement of the unit cells is one of the following arrangements:
R-L-C-MR-A-MR-C-MR-A-C-C-A;
R-L-ML-C-ML-A-ML-C-C-A-A-C.

8. The secondary battery of claim 1, wherein
a unit cell in which a positive electrode is provided on each side of a negative electrode and a separator is provided between the electrodes is defined as an A-type;
a unit cell in which a negative electrode is provided on each side of a positive electrode and a separator is provided between the electrodes is defined as a C-type;
a unit cell in which a single positive electrode and a positive electrode are respectively provided on both sides of a negative electrode, a separator is disposed between the electrodes, and a tab of the single positive electrode is disposed on the right side is defined as an R-type;
a unit cell in which a single positive electrode and a positive electrode are respectively provided on both sides of a negative electrode, a separator is disposed between the electrodes, and a tab of the single positive electrode is disposed on the left side is defined as an L-type;
a unit cell in which a negative electrode and a positive electrode are respectively provided on both sides of a separator, and a tab of the positive electrode is disposed on the right side is defined as an MR-type; and
a unit cell in which a negative electrode and a positive electrode are respectively provided on both sides of a separator, and a tab of the positive electrode is disposed on the left side is defined as an ML-type; wherein
the electrode assembly comprises eleven unit cells, and wherein
when the electrode assembly is unfolded, the arrangement of the unit cells is one of the following arrangements:
R-L-C-MR-A-MR-C-C-A-A-C;
R-L-ML-C-ML-A-C-C-A-A-C;
R-L-ML-C-ML-ML-ML-A-C-C-A;
R-L-C-MR-MR-MR-A-MR-C-C-A.

9. The secondary battery of claim 1, wherein
a unit cell in which a positive electrode is provided on each side of a negative electrode and a separator is provided between the electrodes is defined as an A-type;
a unit cell in which a negative electrode is provided on each side of a positive electrode and a separator is provided between the electrodes is defined as a C-type;
a unit cell in which a single positive electrode and a positive electrode are respectively provided on both sides of a negative electrode, a separator is disposed between the electrodes, and a tab of the single positive electrode is disposed on the right side is defined as an R-type;
a unit cell in which a single positive electrode and a positive electrode are respectively provided on both sides of a negative electrode, a separator is disposed between the electrodes, and a tab of the single positive electrode is disposed on the left side is defined as an L-type;
a unit cell in which a negative electrode and a positive electrode are respectively provided on both sides of a separator, and a tab of the positive electrode is disposed on the right side is defined as an MR-type; and
a unit cell in which a negative electrode and a positive electrode are respectively provided on both sides of a separator, and a tab of the positive electrode is disposed on the left side is defined as an ML-type; wherein
the electrode assembly comprises eight unit cells, and wherein
when the electrode assembly is unfolded, the arrangement of the unit cells is one of the following arrangements:
R-L-ML-C-C-A-A-C;
R-L-C-MR-A-C-C-A;
R-L-C-MR-MR-MR-A-C;
R-L-ML-C-ML-ML-C-A.

10. The secondary battery of claim 1, wherein
a unit cell in which a positive electrode is provided on each side of a negative electrode and a separator is provided between the electrodes is defined as an A-type;
a unit cell in which a negative electrode is provided on each side of a positive electrode and a separator is provided between the electrodes is defined as a C-type;
a unit cell in which a single positive electrode and a positive electrode are respectively provided on both sides of a negative electrode, a separator is disposed between the electrodes, and a tab of the single positive electrode is disposed on the right side is defined as an R-type;
a unit cell in which a single positive electrode and a positive electrode are respectively provided on both sides of a negative electrode, a separator is disposed between the electrodes, and a tab of the single positive electrode is disposed on the left side is defined as an L-type;
a unit cell in which a negative electrode and a positive electrode are respectively provided on both sides of a separator, and a tab of the positive electrode is disposed on the right side is defined as an MR-type; and
a unit cell in which a negative electrode and a positive electrode are respectively provided on both sides of a separator, and a tab of the positive electrode is disposed on the left side is defined as an ML-type; wherein
the electrode assembly comprises ten unit cells, and wherein
when the electrode assembly is unfolded, the unit cells are arranged in the order of: R-L-ML-C-ML-A-ML-C-C-A.

11. The secondary battery of claim 1, wherein
a unit cell in which a positive electrode is provided on each side of a negative electrode and a separator is provided between the electrodes is defined as an A-type;
a unit cell in which a negative electrode is provided on each side of a positive electrode and a separator is provided between the electrodes is defined as a C-type;
a unit cell in which a single positive electrode and a positive electrode are respectively provided on both sides of a negative electrode, a separator is disposed between the electrodes, and a tab of the single positive electrode is disposed on the right side is defined as an R-type;
a unit cell in which a single positive electrode and a positive electrode are respectively provided on both sides of a negative electrode, a separator is disposed between the electrodes, and a tab of the single positive electrode is disposed on the left side is defined as an L-type;
a unit cell in which a negative electrode and a positive electrode are respectively provided on both sides of a separator, and a tab of the positive electrode is disposed on the right side is defined as an MR-type; and
a unit cell in which a negative electrode and a positive electrode are respectively provided on both sides of a separator, and a tab of the positive electrode is disposed on the left side is defined as an ML-type; wherein
the electrode assembly comprises nine unit cells, and wherein
when the electrode assembly is unfolded, the arrangement of the unit cells is one of the following arrangements:
R-L-C-MR-A-MR-C-C-A;
R-L-ML-C-ML-A-C-C-A;
R-L-ML-C-ML-ML-ML-A-C.

12. The secondary battery of claim 1, wherein
a unit cell in which a positive electrode is provided on each side of a negative electrode and a separator is provided between the electrodes is defined as an A-type;
a unit cell in which a negative electrode is provided on each side of a positive electrode and a separator is provided between the electrodes is defined as a C-type;
a unit cell in which a single positive electrode and a positive electrode are respectively provided on both sides of a negative electrode, a separator is disposed between the electrodes, and a tab of the single positive electrode is disposed on the right side is defined as an R-type;
a unit cell in which a single positive electrode and a positive electrode are respectively provided on both sides of a negative electrode, a separator is disposed between the electrodes, and a tab of the single positive electrode is disposed on the left side is defined as an L-type;
a unit cell in which a negative electrode and a positive electrode are respectively provided on both sides of a separator, and a tab of the positive electrode is disposed on the right side is defined as an MR-type; and
a unit cell in which a negative electrode and a positive electrode are respectively provided on both sides of a separator, and a tab of the positive electrode is disposed on the left side is defined as an ML-type; wherein
the electrode assembly comprises seven unit cells, and wherein
when the electrode assembly is unfolded, the unit cells are arranged in the order of: R-L-ML-MR-ML-MR-C.
